# EUROPÄISCHE PATENTANMELDUNG

(11) **EP 2 048 587 A1**
(43) Veröffentlichungstag der Anmeldung: **15.04.2009**
(21) Anmeldenummer: 07019950.0
(22) Anmeldetag: 11.10.2007
(51) Int. Cl.: G06F 17/50, G06Q 10/00, G06Q 50/00

(54) **Vorrichtung und Verfahren zur Planung einer Produktionsanlage**

(71) Anmelder: SIEMENS AKTIENGESELLSCHAFT, 80333 München (DE)
(72) Erfinder: Kröger, Reinhold Prof. Dr., 53560 Vettelschoss (DE); Machens, Holger, 65203 Wiesbaden (DE)

(57) **Zusammenfassung**

Die Erfindung betrifft eine Vorrichtung (1) zur Planung einer Produktionsanlage (3), wobei die Produktionsanlage (3) ein Produktionsgebäude (5) und Fertigungseinrichtungen (7) umfasst, welche Fertigungseinrichtungen (7) wiederum Maschinen mit automatisierungstechnischer, zumindest teilweise in ein Kommunikationsnetzwerk (9) integrierter Ausrüstung umfassen, mit einem Produktdatenmanagementsystem (11), in dem Daten über das herzustellende Produkt (19) und weitere herstellungsrelevante Daten in einer Datenbank (13) gespeichert sind und mit aus einer Planungsplattform (15) heraus aufrufbaren Planungswerkzeugen (17), die jeweils durch Zugriff auf die Datenbank (13) eine zumindest teilweise virtuelle Abbildung des Produktes (19), des Produktionsgebäudes (5) und der Fertigungseinrichtungen (7) ermöglichen, wobei ein Netzwerkplanungswerkzeug (21) für das Kommunikationsnetzwerk (9) in die Planungsplattform (15) integriert ist, wobei das Kommunikationsnetzwerk (9) kennzeichnende Daten über das Produktdatenmanagementsystem (11) verfügbar sind.

## Beschreibung

Die Erfindung betrifft eine Vorrichtung zur Planung einer Produktionsanlage in einem Produktionsgebäude mit automatisierungstechnisch gerüsteten Fertigungsmaschinen, die in ein Kommunikationsnetzwerk integriert sind.

Der Erfolg eines produzierenden Unternehmens hängt ganz wesentlich davon ab, wie schnell Marktanforderungen erkannt und umgesetzt werden. Bestehende Fertigungseinrichtungen müssen sich schnell verändernden Bedingungen anpassen lassen. Die Errichtung von neuen Anlagen muss nicht nur schnell, sondern auch mit einer hohen Planungssicherheit erfolgen können. Unter dem Begriff "digitale Fabrik" entwickelt sich daher eine immer umfassendere Produktionsplanung, die eng mit der Produktentwicklung, aber auch mit weiteren Prozessen und Ressourcen wie Logistik und Betriebmitteln oder auch mit der Personalplanung verzahnt ist. Es entsteht eine äußerst komplexe Planungswelt, deren Funktionieren wesentlich von definierten Schnittstellen und einheitlichen Datenmodellen abhängt. Einen Überblick über dieses Feld findet man z.B. in dem Buch "Digitale Fabrik, Fabriksimulation für Produktionsplaner" von Wolfgang Kühn, Karl-Hanser-Verlag München/Wien, 2006. Durch die möglichst ganzheitliche Überführung aller Aspekte in der Produktionsanlage in Simulationsmodelle ergibt sich eine frühzeitige Absicherung von Investitionen mit einer kurzen Zeit bis zur Errichtung und Inbetriebnahme einer Produktionsanlage. Ein Aspekt ist die Simulation von Automatisierungstechnik. In der WO 2004/053739 A2 ist ein System und ein Verfahren beschrieben, bei dem auf Basis von vorliegenden Beschreibungen einer Anlagenstruktur Automatisierungscode generiert wird. Hierbei werden die Komponenten der Anlage durch Funktionsbausteine repräsentiert und weisen Ports zur Datenübertragung auf. Signale, die den Funktionsbausteinen zugeordnet sind, werden über die Ports übertragen. Verknüpfungen von Automatisierungsgeräten werden in den bekannten Simulationen nur auf logischer Ebene vorgenommen. Tatsächliche, physikalische Kommunikationsnetzwerke werden nicht betrachtet.

Die EP 1 402 325 B1 offenbart ein Verfahren zur Unterstützung der Projektierung von Fertigungsanlagen. Dabei wird die Fertigungsanlage als ein Objekte enthaltendes digitales Modell abgebildet. Dieses digitale Modell wird für eine Anlalyse in eine Simulationsumgebung eingebettet. Für eine realistische Simulation enthält das Modell z.B. Geometriedaten, Kinematikdaten oder steuerungstechnische Funktionsblöcke. Nicht abgebildet wird ein Kommunikationsnetzwerk.

In der EP 1 624 614 A1 ist eine automatische Planung von Netzwerkkonfigurationen beschrieben. Die Planung komplexer Netzwerke erfolgt hier insbesondere durch eine Zerlegung in Teilprobleme. Mittels einer solchen Zerlegung ist es möglich, auch für Systeme mit mehr als tausend Teilnehmern ein Netz hinsichtlich seiner Randbedingungen von Verzögerungen, Kosten und maximaler Datenlast auszulegen.

Der Erfindung liegt die Aufgabe zugrunde, eine Vorrichtung und ein Verfahren zur Planung einer Produktionsanlage anzugeben, mit der bzw. denen eine besonders hohe Simulationsgenauigkeit erreicht wird.

Die Erfindung geht von der Erkenntnis aus, dass eine verlässliche Simulation bzw. Abbildung einer Produktionsanlage eine möglichst vollständige und ganzheitliche Betrachtung sämtlicher relevanter Komponenten erfordert. Insbesondere wurde bisher der wesentliche Einfluss eines Kommunikationsnetzwerks auf die Abläufe innerhalb einer Produktionsanlage unterschätzt bzw. gar nicht wahrgenommen. Das Problem wurde lediglich durch eine massiv vereinfachende Verknüpfung miteinander kommunizierender Komponenten adressiert. Einfluss etwa auf das Echtzeitverhalten aufgrund von Kommunikationsverzögerungen oder auch der Verfügbarkeit bis hin zur Frage einer Kabelführung können aber in der realen Welt die Abläufe so beeinflussen, dass es bei einer mangelnden Berücksichtigung in der Simulation zu wesentlichen Abweichungen und Fehlplanungen kommen kann.

Erfindungsgemäß wird die auf eine Vorrichtung gerichtete Aufgabe gelöst durch eine Vorrichtung zur Planung einer Produktionsanlage, wobei die Produktionsanlage ein Produktionsgebäude und Fertigungseinrichtungen umfasst, welche Fertigungseinrichtungen wiederum Maschinen mit automatisierungstechnischer, zumindest teilweise in ein Kommunikationsnetzwerk integrierter Ausrüstung umfassen, mit einem Produktdatenmanagementsystem, in dem Daten über das herzustellende Produkt und weitere herstellungsrelevante Daten in einer Datenbank gespeichert sind, und mit aus einer Planungsplattform heraus aufrufbaren Planungswerkzeugen, die jeweils durch Zugriff auf die Datenbanken eine zumindest teilweise virtuelle Abbildung des Produktes, des Produktionsgebäudes und der Fertigungseinrichtungen ermöglichen, wobei ein Netzwerk-Planungswerkzeug für das Kommunikationsnetzwerk in die Planungsplattform integriert ist und wobei das Kommunikationsnetzwerk kennzeichnende Daten über das Produktdatenmanagement verfügbar sind.

Durch die Integrierung des Netzwerksplanungswerkzeugs in die Planungsplattform ist es nunmehr erstmals möglich, die Einflüsse des Kommunikationsnetzwerks in die Gesamtplanung der Produktionsanlage eng einzubeziehen.

Vorzugsweise weist die Planungsplattform eine Plug-in-Architektur auf, wobei das Netzwerkplanungswerkzeug als Plug-in integriert ist.

Bevorzugtermaßen sind folgende, das Kommunikationsnetzwerk kennzeichnende Daten als Eingabe für das Netzwerkplanungswerkzeug über das Produktdatenmanagementsystem verfügbar:
a) eine Liste mit den verwendbaren Netzwerkelementen,
b) die Positionen der Netzwerkadapter aller Automatisierungsgeräte,
c) die logische Verschaltung der Automatisierungsgeräte, aus der auch die verwendeten Kommunikationsprotokolle hervorgehen und damit die induzierte Netzwerklast,
d) die logische Gruppierung von Automatisierungsgeräten,
e) die vom Benutzer gestellten Quality-of-Service-Anforderungen,
f) die maximal zulässigen Kosten,
g) die Restriktionen für die Verlegung von Netzwerkkabeln und
h) Vorgaben zur Netzwerktopologie.

Vorzugsweise sind folgende, das Kommunikationsnetzwerk kennzeichnende Daten als Ergebnis des Netzwerkplanungswerkzeugs über das Produktdatenmanagementsystem verfügbar:
a) die eingesetzten Switches mit Position und einer Referenz auf den Typ in der Materialliste,
b) das Netzwerk mit den Kabeln incl. einer Referenz auf den Kabeltyp in der Materialliste und einer genauen Beschreibung des Kabelverlaufs,
c) die Auslastung der Netzwerkkabel,
d) die erreichten Ende-zu-Ende-Verzögerungszeiten für die angegebenen logischen Verschaltungen (Kommunikationsbeziehungen) der Automatisierungsgeräte und
e) die Gesamtkosten.

Bevorzugtermaßen weist die Planungsplattform zum Netzwerkplanungswerkzeug eine Monitoring-Schnittstelle auf, über die der aktuelle Status der Netzwerkplanung darstellbar ist. Weiter bevorzugt ist dabei die Monitoring-Schnittstelle als Remote-Procedure-Call ausgeführt, mit dem der Status durch ein asynchrones Polling abgefragt wird. Die Kommunikation an der Monitoring-Schnittstelle basiert aus zwei Gründen auf dem Polling-Prinzip. Zum einen wird durch die asynchrone Kommunikationsform eine Blockierung des sehr zeitintensiven Netzwerkplanungsprozesses verhindert. Zum anderen dient das Monitoring nur der Überwachung durch den Benutzer, und für diesen ist es nicht möglich, einzelne Zustandsänderungen bewusst zu verfolgen, wenn diese in zeitlichen Abständen im Millisekundenbereich erfolgen.

Die auf ein Verfahren gerichtete Aufgabe wird erfindungsgemäß gelöst durch ein Verfahren zur Planung einer Produktionsanlage, wobei die Produktionsanlage ein Produktionsgebäude und Fertigungseinrichtungen umfasst, welche Fertigungseinrichtungen wiederum Maschinen mit automatisierungstechnischer, zumindest teilweise in ein Kommunikationsnetzwerk integrierter Ausrüstung umfassen, mit einem Produktdatenmanagementsystem, in dem Daten über das herzustellende Produkt und weitere herstellungsrelevante Daten in einer Datenbank gespeichert werden und mit aus einer Planungsplattform heraus aufgerufenen Planungswerkzeugen mittels der eine zumindest teilweise virtuelle Abbildung des Produktes, des Produktionsgebäudes und der Fertigungseinrichtungen erzeugt wird, wobei hierzu jedes Planungswerkzeug erforderliche Produkt- bzw. Anlageninformationen aus der Datenbank bezieht.

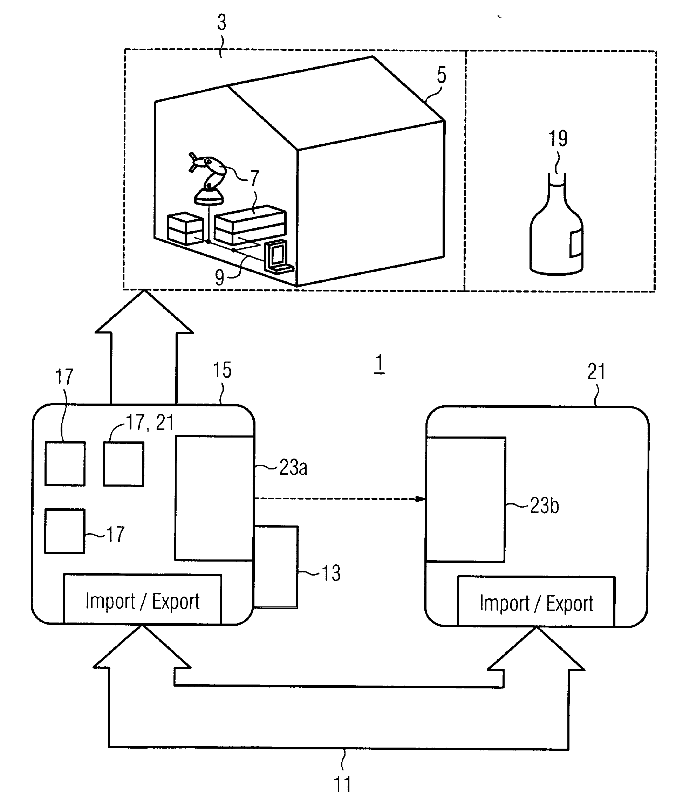

Die Erfindung wird beispielhaft anhand der Zeichnung näher erläutert. Die einzige Figur zeigt schematische eine Vorrichtung und ein Verfahren zur Planung einer Produktionsanlage.

Die Vorrichtung 1 zur Planung einer Produktionsanlage 3 ermöglicht die Erstellung eines Modells der Produktionsanlage 3, in dem ein Produktionsgebäude 5 mit Fertigungseinrichtungen 7 abgebildet sind. Die Fertigungseinrichtungen 7 sind automatisierungstechnisch ausgerüstet und über ein Kommunikationsnetzwerk 9 verbunden. Die Produktionsanlage 3 ist zur Fertigung des Produktes 19 ausgelegt. Die Vorrichtung 1 weist ein Produktdatenmanagementsystem 11 auf. Über das Produktdatenmanagementsystem 11 werden zentral sämtliche planungsrelevanten Daten zusammengeführt. Die Daten sind in einer Datenbank 13 gespeichert. Die Vorrichtung 1 weist weiter eine Planungsplattform 15 auf. Durch diese Planungsplattform 15 wird eine Umgebung bereitgestellt, in der Planungswerkzeuge 17 integriert sind. Die Planungsplattform 15 ist dabei in einer Plug-in-Architektur so ausgeführt, dass die Planungswerkzeuge 17 als Plug-ins aufrufbar sind. Eines der Planungswerkzeuge 17 ist ein Netzwerkplanungswerkzeug 21. Dieses weist eine Monitoring-Schnittstelle 23 auf, über die der Planungsstatus im Netzwerkplanungsprozess dargestellt werden kann.

Zunächst erfolgt eine Eingabe der erforderlichen Netzwerkplanungsdaten. Solche Eingabedaten sind etwa
a) eine Liste mit den verwendbaren Netzwerkelementen,
b) die Positionen der Netzwerkadapter aller Automatisierungsgeräte,
c) die logische Verschaltung der Automatisierungsgeräte, aus der auch die verwendeten Kommunikationsprotokolle hervorgehen und damit die induzierte Netzwerklast,
d) die logische Gruppierung von Automatisierungsgeräten,
e) die vom Benutzer gestellten Quality-of-Service-Anforderungen,
f) die maximal zulässigen Kosten,
g) die Restriktionen für die Verlegung von Netzwerkkabeln und
h) Vorgaben zur Netzwerktopologie.

Diese Eingabe kann durch den Benutzer erfolgen und durch entsprechende Erweiterungen der Planungsplattform unterstützt werden. Die Unterstützung könnte beispielsweise in der Transformation vorliegender Informationen über logische Verschaltungen oder Materialflussbeziehungen in Netzwerkplanungsrelevante Daten bestehen, wie logische Kommunikationsverbindungen zwischen Automatisierungsgeräten oder logische Gruppierungen der Geräte.

Der Benutzer kann während der Eingabe eine Konstistenzprüfung der Netzwerkplanungsdaten durchführen und erhält dadurch eine Kontrolle.

Unterstützt wird auch ein iterativer Planungsprozess, d.h. es können bereits geplante Teile der Anlage mit bestehenden Netzwerken mit in die Netzwerkplanung integriert werden.

## Patentansprüche

1. Vorrichtung (1) zur Planung einer Produktionsanlage (3), wobei die Produktionsanlage (3) ein Produktionsgebäude (5) und Fertigungseinrichtungen (7) umfasst, welche Fertigungseinrichtungen (7) wiederum Maschinen mit automatisierungstechnischer, zumindest teilweise in ein Kommunikationsnetzwerk (9) integrierter Ausrüstung umfassen, mit einem Produktdatenmanagementsystem (11), in dem Daten über das herzustellende Produkt (19) und weitere herstellungsrelevante Daten in einer Datenbank (13) gespeichert sind und mit aus einer Planungsplattform (15) heraus aufrufbaren Planungswerkzeugen (17), die jeweils durch Zugriff auf die Datenbank (13) eine zumindest teilweise virtuelle Abbildung des Produktes (19), des Produktionsgebäudes (5) und der Fertigungseinrichtungen (7) ermöglichen,
**dadurch gekennzeichnet, dass** ein Netzwerkplanungswerkzeug (21) für das Kommunikationsnetzwerk (9) in die Planungsplattform (15) integriert ist, wobei das Kommunikationsnetzwerk (9) kennzeichnende Daten über das Produktdatenmanagementsystem (11) verfügbar sind.

2. Vorrichtung (1) nach Anspruch 1, bei der die Planungsplattform (15) eine Plug-in-Architektur aufweist und das Netzwerkplanungswerkzeug (21) als Plug-in integriert ist.

3. Vorrichtung (1) nach einem der vorhergehenden Ansprüche, bei der folgende, das Kommunikationsnetzwerk (9) kennzeichnende Daten als Eingabe für das Netzwerkplanungswerkzeug (21) über das Produktdatenmanagementsystem (11) verfügbar sind:
a) Eine Liste der verwendbaren Netzwerkelemente
b) die Positionen der Netzwerkadapter aller Automatisierungsgeräte,
c) die logische Verschaltung der Automatisierungsgeräte, aus der auch die verwendeten Kommunikationsprotokolle hervorgehen und damit die induzierte Netzwerklast,
d) die logische Gruppierung von Automatisierungsgeräten,
e) die vom Benutzer gestellten Quality-of-Service-Anforderungen,
f) die maximal zulässigen Kosten,
g) die Restriktionen für die Verlegung von Netzwerkkabeln und
h) Vorgaben zur Netzwerktopologie.

4. Vorrichtung (1) nach einem der vorhergehenden Ansprüche, bei der folgende, das Kommunikationsnetzwerk (9) kennzeichnende Daten als Ergebnis des Netzwerkplanungswerkzeugs (21) über das Produktdatenmanagementsystem (11) verfügbar sind:
a) die eingesetzten Switches mit Position und einer Referenz auf den Typ in der Materialliste,
b) das Netzwerk mit den Kabeln incl. einer Referenz auf den Kabeltyp in der Materialliste und einer genauen Beschreibung des Kabelverlaufs,
c) die Auslastung der Netzwerkkabel,
d) die erreichten Ende-zu-Ende-Verzögerungszeiten für die angegebenen logischen Verschaltungen (Kommunikationsbeziehungen) der Automatisierungsgeräte und
e)die Gesamtkosten.

5. Vorrichtung (1) nach einem der vorhergehenden Ansprüche, bei der die Planungsplattform (15) mit dem Netzwerkplanungswerkzeug (21) eine Monitoring-Schnittstelle (23) aufweist, über die der aktuelle Status der Netzwerkplanung darstellbar ist.

6. Vorrichtung (1) nach Anspruch 5, bei der die Monitoring-Schnittstelle (23) als Remote-Procedure-Call ausgeführt ist, mit dem der Status durch ein asynchrones Polling abgefragt wird.

7. Verfahren zur Planung einer Produktionsanlage (3), wobei die Produktionsanlage (3) ein Produktionsgebäude (5) und Fertigungseinrichtungen (7) umfasst, welche Fertigungseinrichtungen (7) wiederum Maschinen mit automatisierungstechnischer, zumindest teilweise in ein Kommunikationsnetzwerk (9) integrierter Ausrüstung umfassen, mit einem Produktdatenmanagementsystem (11), in dem Daten über das herzustellende Produkt (19) und weitere herstellungsrelevante Daten in einer Datenbank (13) gespeichert werden und mit aus einer Planungsplattform (15) heraus aufgerufenen Planungswerkzeugen (17) mittels der eine zumindest teilweise virtuelle Abbildung des Produktes (19), des Produktionsgebäudes (5) und der Fertigungseinrichtungen (7) erzeugt wird, wobei hierzu jedes Planungswerkzeug (17) erforderliche Produkt- bzw. Anlageninformationen aus der Datenbank (13) bezieht,
**dadurch gekennzeichnet, dass** mittels eines in die Planungsplattform (15) integrierten Netzwerkplanungswerkzeugs (21) auch eine Planung des Kommunikationsnetzwerks (9) erfolgt, wobei das Kommunikationsnetzwerk (9) kennzeichnende Daten über das Produktdatenmanagementsystem (11) aus der Datenbank (13) bezieht.
